# EUROPÄISCHE PATENTSCHRIFT

(11) **EP 1 832 176 B1**
(45) Veröffentlichungstag und Bekanntmachung des Hinweises auf die Patenterteilung: **26.11.2008**
(21) Anmeldenummer: 06004867.5
(22) Anmeldetag: 09.03.2006
(51) Int. Cl.: A22C 11/02, F16K 1/36

(54) **Vorrichtung zur Füllstandsregelung und zur geregelten Evakuierung von pastösen Massen**
Device for controlling the fill level and for controlled evacuation of a pasty material
Dispositif de régulation du remplissage et d'évacuation réglée d'un produit pâteux

(43) Veröffentlichungstag der Anmeldung: 12.09.2007
(60) Teilanmeldung: 07006713.7
(73) Patentinhaber: Albert Handtmann Maschinenfabrik GmbH & Co. KG, 88400 Biberach/Riss (DE)
(72) Erfinder: Maile, Bernd, 88422 Oggelshausen (DE); Staudenrausch, Martin, 88400 Biberach (DE)
(74) Vertreter: Grünecker, Kinkeldey, Stockmair & Schwanhäusser Anwaltssozietät

(56) Entgegenhaltungen:
- EP-A- 1 051 912
- EP-A- 1 502 509
- EP-A2- 0 198 300
- DE-A1- 4 417 906
- GB-A- 998 572
- GB-A- 1 380 082
- US-A- 3 166 786
- US-A- 4 427 040

## Beschreibung

Die Erfindung betrifft einen Vakuumtrichter für die Wurstproduktion, einen Vakuumfüller, der einen solchen Vakuumtrichter umfasst, sowie ein Einlassventil, das in dem erfindungsgemäßen Vakuumtrichter verwendbar ist.

Aus der Druckschrift EP-A-1502509 ist bereits ein Vakuumtrichter der eingangs genannten Art bekannt, der ein Einlassventil aufweist. Bei dem Ventil ist eine Abdichtung vorgesehen, die die Zuführung für Brät verschließen kann, wobei im Betrieb das Material aufgrund des Unterdrucks im Trichter aus einem Vorrat über den Einlass angesaugt wird. Die Abdichtung wird von einer Steuerung angesteuert und zwar in Abhängigkeit von einem Signal einer Dedektionseinrichtung im Trichter.

Aus der Druckschrift US-A-3166786 ist ein Verfahren bekannt, bei dem möglichst viel Luft aus einer pastösen Masse evakuiert werden kann. Dazu ist eine Scheibe mit kleinen Löchern vorgesehen, die kleine Ströme erzeugt, um so der Masse mehr Luft zu entziehen. Die Lochgröße und die Platte sind fest, so dass der Evakuierungsgrad nicht veränderbar ist.

Aus der Druckschrift EP-A-1051912 ist bereits ein Einlassventil bekannt, mit einem Ventilsitz und einem beweglichen Ventilkopf. Aus der EP-A2-0198300 ist bereits ein Absperrventil mit weichdichtendem Ventilkegel bekannt.

Üblicherweise werden bei der Wurstproduktion Füllmaschinen verwendet, deren Fülltrichter oben offen sind. Dabei wird das sich im Trichter befindliche Wurstbrät von einer umlaufenden Zubringerkurve zur Mitte hin gefördert. Im Förderwerk, das sich am Auslass des Fülltrichters befindet, wird mittels einer Vakuumpumpe ein Unterdruck erzeugt, um dem Wurstbrät Luft und damit Sauerstoff zu entziehen, womit die Haltbarkeit der Wurst verlängert wird. Andererseits entsteht durch den Unterdruck im Förderwerk ein Druckunterschied Ap zur Oberfläche der Trichterbefüllung, der dazu führt, dass die pastöse Masse durch den atmosphärischen Luftdruck in die Förderwerkskammer gedrückt wird.

Die Evakuierung des Wurstbräts kann mit diesem Verfahren nur in eingeschränktem Maße erfolgen. Um dem Wurstbrät noch mehr Luft und damit Sauerstoff zu entziehen, werden geschlossene Trichter eingesetzt, sogenannte Vakuumtrichter, wobei bereits im Trichter ein Unterdruck erzeugt wird. Durch diesen Unterdruck wird die abzufüllende pastöse Masse aus einem Vorratsbehälter durch den dort herrschenden höheren Druck in den geschlossenen Trichter gedrückt. Alternativ kann die Beschickung des Vakuumtrichters auch mit einer zusätzlichen Pumpe unter Druck erfolgen. Beim und nach dem Einströmen von Masse in den geschlossenen evakuierten Trichter werden oberflächennahe Luftanteile wie beispielsweise Luftblasen der pastösen Füllmasse aufgerissen und abgesaugt, d. h. es erfolgt eine gewisse Evakuierung der einströmenden Masse.

Der Füllstand im Trichter wird dabei üblicherweise mittels Füllstandssensor erfasst. Abhängig vom Füllstand wird das Ventil am Zufuhrrohr geöffnet bzw. geschlossen (Zweipunktregelung). Zweck dieser Regelung ist einzig die Niveauregelung des Trichterinhalts.

Die bekannten Techniken weisen jedoch den Nachteil auf, dass das Einströmen der Masse mehr oder minder schlagartig und unkontrolliert erfolgt. Dabei ist der Evakuierungsgrad der einströmenden Masse prinzipbedingt nicht optimal, da oberflächenferne Luftanteile in der Masse verbleiben.

Hiervon ausgehend liegt der vorliegenden Erfindung die Aufgabe zugrunde, eine Vorrichtung bereitzustellen, die ermöglicht, Insbesondere bei dünnflüssigen Füllmassen den Füllstand gut kontrollieren und unkontrolliertes Spritzen zu vermeiden.Erfindungsgemäß wird diese Aufgabe durch die Merkmale der Ansprüche 1 und 14 gelöst.

Dadurch, dass gemäß der vorliegenden Erfindung die Höhe des Einlassspalts am Einlassventil über eine Regeleinrichtung geregelt werden kann, kann gezielt der Evakuierungsgrad, also die verbleibende Menge an Restluft bzw. restlichem Sauerstoff in der pastösen Masse beeinflusst und geregelt werden. Gemäß der vorliegenden Erfindung kann demnach ein möglichst dünner Massequerschnitt im Einströmbereich erzielt werden. Somit sind sämtliche eingeschlossenen Luftanteile oberflächennah und können somit gut aufreißen und abgesaugt werden. Der Evakuierungsgrad hängt u. a. vom Massequerschnitt und damit von der Einlassspalthöhe ab.

Somit kann gemäß der vorliegenden Erfindung der Einlassspalt am Einlassventil des Vakuumtrichters zur Füllstandsregelung und zur geregelten Evakuierung der pastösen Masse geregelt werden. Das Einströmen der pastösen Masse erfolgt nunmehr nicht mehr schlagartig oder unkontrolliert, sondern kontrolliert und kann z. B. an die Füllleistung des Förderwerks, an die Produkteigenschaften, wie beispielsweise an den Luftgehalt der pastösen Masse vor dem Einströmen in den Vakuumtrichter angepasst werden, wobei die Regelung des Ventils nicht mehr über eine Zweipunktregelung sondern über eine Mehrpunktregelung oder Proportionalregelung erfolgt. Der Luftgehalt des Endproduktes kann somit gezielt beeinflusst werden.

Die Prallplatte ist erfindungsgemäß so geformt, dass sie die pastöse Masse nach unten, bzw. schräg nach unten, d. h. in Richtung Auslass des Vakuumtrichters leitet. Durch das Umlenken der Füllmasse nach unten wird insbesondere bei dünnflüssigeren Füllmassen der Füllstand besser kontrolliert, da das Brät beim Eintritt in den Trichter nicht so sehr an den Deckel und die Trichterwand spritzt.

Die erfindungsgemäße Prallplatte ist so geformt, dass sie auf der zum Ventilsitz gerichteten Seite eine Aussparung umfasst, die zumindest im äußeren Bereich des Einlassspalts einen von der Mittelachse des Einlassventils aus schräg nach unten oder nach unten geneigten Abschnitt umfasst.

Vorzugsweise weist die vorliegende Erfindung eine Regeleinrichtung zum Regeln der Spalthöhe in Abhängigkeit der Kompressibilität bzw. des Luftgehalts der pastösen Masse vor dem Einlassventil und/oder nach dem Auslass und/oder zwischen Einlassventil und Auslass (z. B. im Vakuumtrichter) und von Füllstandsparametern auf. Das bedeutet, dass durch Änderung des Luftanteils in der pastösen Masse auch die Kompressibilität verändert wird und die Höhe des Einlassspalts in Abhängigkeit dieser Größe verändert wird, um beispielsweise einen bestimmten Luftanteil einzustellen. Ist beispielsweise viel Luft in der pastösen Masse eingeschlossen, so muss der Spalt möglichst klein gewählt werden, damit die eingeschlossenen Luftblasen gut aufreißen können. Die Regelung des Spalts S erfolgt jedoch auch in Abhängigkeit von Füllstandsparametern. Unter Füllstandsparameter fallen beispielsweise die Füllleistung der pastösen Masse durch den Einlass in den Vakuumtrichter und/oder der Füllstand im Trichter und/oder die Förderleistung eines Förderwerks, das am Auslass des Vakuumtrichters angeordnet ist.

Eine derartige Regeleinrichtung zum Regulieren der Spalthöhe regelt die Spalthöhe beispielsweise in Abhängigkeit von mindestens einem Parameter aus folgender Gruppe: Kompressibilität oder Luftgehalt der pastösen Masse vor dem Einlassventil, Kompressibilität oder Luftgehalt der pastösen Masse nach dem Auslass (z. B. am Auslauf eines nachgeschalteten Förderwerks) oder im Vakuumtrichter, Füllleistung der pastösen Masse in den Vakuumtrichter, Stückgrößen von Einlagen der Masse, Druckdifferenz vor und nach dem Einlassventil, Förderleistung eines Förderwerks, das am Auslauf des Vakuumtrichters angeordnet ist, sowie Füllstand der pastösen Masse im Vakuumtrichter, Temperatur der pastösen Masse, Viskosität der pastösen Masse.

Gemäß der vorliegenden Erfindung hat der Einlassspalt beispielsweise einen kreisrunden oder elliptischen Querschnitt. Auch andere geschlossene Querschnittsformen sind denkbar.

Gemäß der vorliegenden Erfindung weist das Ventif am Einlass einen Ventilsitz und eine gegenüberliegende Prallplatte auf, wobei der Abstand zwischen Sitz und Prallplatte die Spalthöhe ergibt. So kann auf kostengünstige und einfache Art und Weise das erfindungsgemäße Einlassventil realisiert werden.

Gemäß der vorliegenden Erfindung weist das Einlassventil einen Antrieb für die Prallplatte zur Einstellung der Spalthöhe auf. Dieser Antrieb erlaubt eine exakte Einstellung der entsprechenden Prallplattenposition bzw. der Spalthöhe Es ist auch eine Ausführung mit feststehender Prallplatte und mittels eines Antriebs verstellbarem Ventilsitz denkbar.

Gemäß einer bevorzugten Ausführungsform ist der Durchmesser der Prallplatte größer als der Durchmesser des Ventilsitzes bzw. der Ventilöffnung.

An diesem Abschnitt kann die pastöse Masse dann in Richtung Auslass geleitet werden.

Eine solche Aussparung kann beispielsweise eine im Wesentlichen konkave Form aufweisen oder kann beispielsweise ringförmig um die Mittelachse des Ventils verlaufen.

Vorzugsweise ist der Einlass im oberen Bereich des Vakuumtrichters in Form eines Zulaufrohrs ausgebildet, dessen offenes Ende in den Trichter ragt und nach oben gewandt ist, wobei die Prallplatte dem offenen Ende gegenüberliegt.

Vorzugsweise weist der Vakuumtrichter vor dem Einlassventil und/oder nach dem Auslass des Trichters, z. B. im Förderwerk eine Einrichtung zum Bestimmen des Luftgehalts bzw. zur Bestimmung der Kompressibilität auf. Wenn eine solche Einrichtung zur Bestimmung des Luftgehalts bzw. zur Bestimmung der Kompressibilität vorgesehen ist, können die gemessenen Werte an die Regeleinrichtung weitergeleitet werden, wobei dann beispielsweise die Regelung des Einlassspalts über die gemessenen Werte erfolgen kann. Weiter kann der Vakuumtrichter einen Füllstandsmesser aufweisen. Der Vakuumtrichter kann weiter auch vor und/oder nach dem Einlassventil einen Druckmesser aufweisen. Weiter Druckmesser können vor, im und nach dem Förderwerk angeordnet sein.

Ein Vakuumfüller gemäß der vorliegenden Erfindung umfasst weiter ein Förderwerk, das die pastöse Masse aus dem Auslass des Vakuumtrichters abführt und in ein Füllrohr schiebt, um Würste mit der pastösen Masse zu befüllen, und weiter weist ein derartiger Vakuumfüller eine Vakuumpumpe auf, um einen Unterdruck unterschiedlicher Höhe im Vakuumtrichter und ggfs. auch im Förderwerk zu erzeugen.

Mit dem erfindungsgemäßen Vakuumtrichter kann eine Spaltregelung durchgeführt werden, wobei die Spalthöhe des Einlassspalts derart geregelt wird, dass er so groß wie nötig zur Füllstandsregelung ist, aber auch so klein wie erforderlich zur Regelung des Evakuierungsgrads.

Gemäß der vorliegenden Erfindung soll die Geometrie der Ventilöffnung bevorzugt so sein, dass der Öffnungsspalt, d. h. der Eintrittsspalt, möglichst lang ist, d. h., dass das Zuführrohr einen möglichst großen Durchmesser aufweist, dass ausreichend Masse zugeführt werden kann, obwohl die Höhe des Spalts S möglichst klein gehalten werden soll.

Das Einlassventil zum geregelten Einlass von pastöser Masse in einen Vakuumtrichter weist eine einem Ventilsitz gegenüberliegende Prallplatte auf, wobei die Prallplatte derart ausgebildet ist, dass sie die pastöse Masse in eine Richtung entgegengesetzt bzw. schräg zur Einlassrichtung umlenkt. Diese Form der Prallplatte führt zu einer Umlenkung der Füllmasse beispielsweise nach unten, wodurch einerseits, insbesondere bei dünnflüssigeren Füllmassen, der Füllstand besser kontrolliert werden kann, da das Brät beim Eintritt in den Trichter nicht so sehr an den Deckel und die Trichterwand spritzt.

Insbesondere wird die pastöse Masse unter einem Winkel von ungefähr 100° bis 180° in Bezug auf die Einlassrichtung bzw. in Bezug auf die Mittelachse des Einlassventils umgelenkt.

Gemäß der Erfindung weist die Prallplatte eine auf der zum Ventilsitz gerichteten Seite eine Aussparung auf, die zumindest im äußeren Bereich des Einlassspalts einen von der Mittelachse des Einlassventils aus schräg nach unten geneigten Abschnitt umfasst.

Gemäß einem bevorzugten Ausführungsbeispiel ist der Durchmesser der Prallplatte größer als der Durchmesser des Ventilsitzes.

Die Aussparung kann eine im Wesentlichen konkave Form aufweisen oder aber ringförmig um die Mittelachse des Ventils verlaufen.

Die vorliegende Erfindung wird nachfolgend unter Bezugnahme der folgenden Figuren näher erläutert.
- Fig. 1: zeigt einen schematischen Schnitt durch einen Vakuumfüller gemäß der vorliegenden Erfindung.
- Fig. 2: zeigt eine Draufsicht auf eine Prallplatte eines erfindungsgemäßen Einlassventils.
- Fig. 3: zeigt in schematischer Weise einen Querschnitt einer weiteren Ausführungsform einer Prallplatte des Einlassventils gemäß der vorliegenden Erfindung.
- Fig. 4: zeigt den Zusammenhang zwischen Spalthöhe und Evakuierungsgrad.
- Fig. 5: zeigt einen Schnitt durch eine Flügelzellenpumpe, wie sie als Förderwerk für die vorliegende Erfindung verwendet werden kann.
- Fig. 6: zeigt schematisch ein Blockschaltbild eines Regelkreises gemäß der vorliegenden Erfindung.

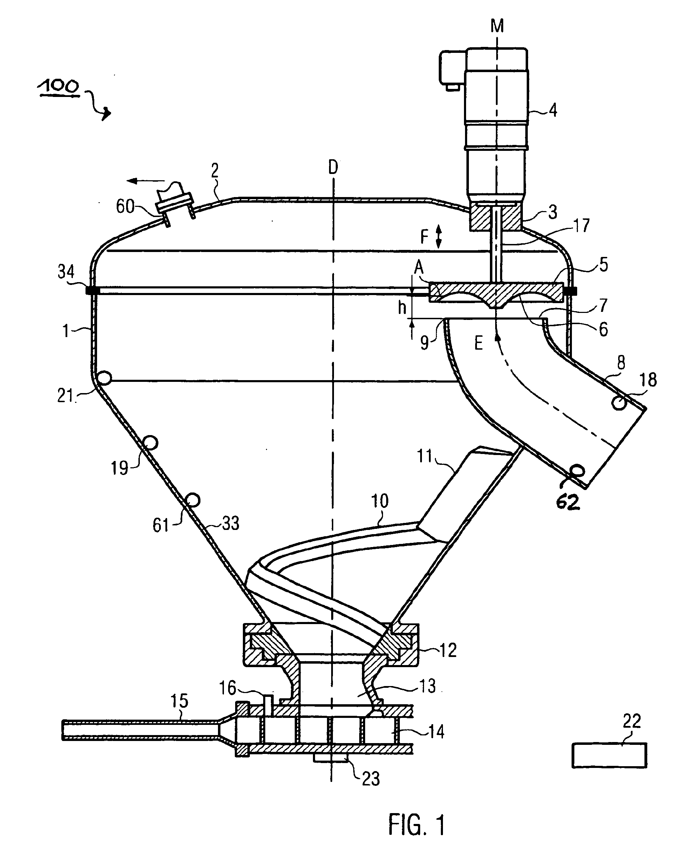

Fig. 1 zeigt schematisch einen Vakuumfüller 100 gemäß der vorliegenden Erfindung. Der Vakuumfüller 100 umfasst einen Vakuumtrichter 1, der aus einem Trichter 33 und einem Deckel 2 zusammengesetzt ist. Der Trichter 33 und der Deckel 2 sind über eine Dichtung 34, hier z.B. ein Dichtring, vakuumdicht miteinander verbunden. Der Vakuumtrichter 1 umfasst einen Einlass 7 zum Zuführen einer pastösen Masse aus einem nicht dargestellten Vorratsbehälter über das Zuführrohr 8. Der Trichter 1 umfasst weiter am unteren Ende, d. h. an dem dem Deckel 2 gegenüberliegenden Ende einen Auslass 13 für die pastöse Masse. Die pastöse Masse, die sich im Trichter befindet, wird hier von einer umlaufenden Zubringerkurve 10 zur Mitte hin gefördert. Die Zubringerkurve 10 weist hier einen Schaber 11 auf. Die Zubringerkurve ist in bekannter Weise in dem Lager 12 um die Mittelachse D drehbar gelagert und wird mit Hilfe eines nicht gezeigten Antriebs in bekannter Weise um die Achse D gedreht. Der Schaber 11 kommt dabei an der Innenwand des Trichters 1 zu liegen.

Am Auslass 13 ist ein Förderwerk angeordnet, das die pastöse Masse aus dem Vakuumtrichter 1 in ein Füllrohr 15 fördert. Über das Füllrohr 15 wird dann in bekannter Weise die pastöse Masse, wie beispielsweise das Wurstbrät, in dafür vorgesehene Wursthüllen geschoben.

In dem geschlossenen Vakuumtrichter 1 wird mittels einer Vakuumpumpe 23, die hier nur schematisch angedeutet ist, ein Unterdruck erzeugt. Dies erfolgt z. B. über einen separaten Vakuumanschluss 60. Somit kann dem Wurstbrät Luft und Sauerstoff entzogen werden, wodurch die Haltbarkeit des Fertigprodukts verlängert wird. Der Luftinhalt ist außerdem entscheidend für das Schnittbild und den Biss des Fertigprodukts. Der Unterdruck im Vakuumtrichter 1 bringt weiter den Vorteil mit sich, dass die abzufüllende pastöse Masse aus dem Vorratsbehälter durch den dort herrschenden Normaldruck in den geschlossenen Vakuumtrichter 1 gedrückt bzw. gezogen wird. Alternativ kann die Beschickung des Vakuumtrichters auch mit einer zusätzlichen Pumpe unterstützt werden oder unter Druck erfolgen.

Im Förderwerk 14 kann ebenfalls mittels einer Vakuumpumpe 23 ein Unterdruck erzeugt werden, um der pastösen Masse, d. h. dem Wurstbrät noch zusätzlich Luft und damit Sauerstoff zu entziehen. Der Absolutdruck im Förderwerk ist kleiner oder gleich dem Druck im Vakuumtrichter, so dass durch den Unterdruck im Förderwerk 14 die pastöse Masse aus dem Vakuumtrichter in die Förderwerkskammern gedrückt wird. Ein zusätzliche mechanische Unterstützung für das Überführen der pastösen Masse in das Förderwerk beispielsweise mittels einer Förderschnecke ist denkbar.

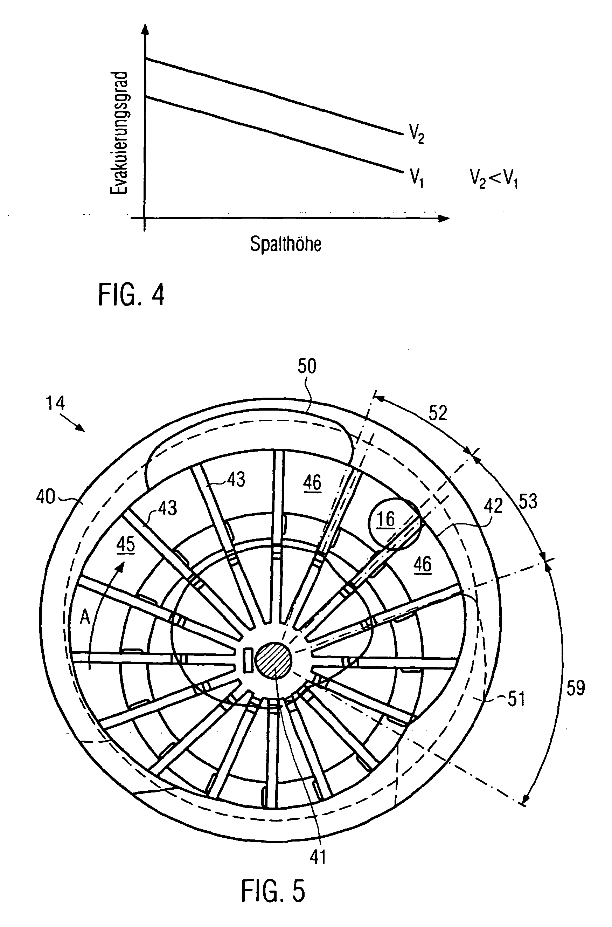

Ein Beispiel für ein derartiges Förderwerk 14 ist in der Fig. 5 dargestellt. Fig. 5 zeigt eine allgemein bekannte Flügelzellenpumpe, wie sie auch näher in der EP 1040758 B1 oder in der DE 4227621 A1 beschrieben ist. Wie aus Fig. 5 ersichtlich ist, besteht die Flügelzellenpumpe aus einem Pumpengehäuse 40 und einem darin exzentrisch angeordneten, in Drehung versetzbaren Rotor mit einer Pumpenwelle 41. In dem Rotor sind radial verschiebbare gelagerte Flügel 43 angeordnet, die mit der Wandung 42 des Pumpgehäuses 40, dem Boden 45 und dem Deckel (nicht dargestellt) des Gehäuses und der Außenfläche des Rotors 41 Förderzellen 46 bilden und in abdichtendem Sinn zusammenwirken, wobei das Pumpengehäuse 40 einen Bräteinlass 50 und einen Brätauslass 51 aufweist, zwischen denen ein Kompressionssektor 52 und ein Dosiersektor 53 verwirklicht sein kann. Der Einlass 50 ist mit dem Auslass 13 des Vakuumtrichters 1 verbunden. In dem Kompressionssektor 52 verändert z. B. bei diesem Ausführungsbeispiel die Innenwand 42 ihren Abstand zur Pumpenwelle 41, so dass sich die bei Drehung des Rotors um die Pumpenwelle 41 in Richtung A des Kompressionsraums gemessene Länge der Flügel 43 verkürzt, weil die Flügel auf der Kompressionsraumseite in Richtung zur Welle 41 hin verschoben werden. Bewegt sich der Rotor also um die Pumpenwelle 41 in Drehrichtung A, wird im Kompressionssektor 52 das Volumen der Kammer 8a verkleinert. Im Dosiersektor 53 bleibt das Kammervolumen bei Drehung des Rotors um die Welle 41 konstant, so dass ein definiertes Dosiervolumen entsteht. Im Auslasssektor 59 befindet sich die jeweilige Flügelzelle mit einem Flügelzellenauslass 51 in Verbindung, durch den die pastöse Masse z. B. in das Füllrohr 15 geschoben wird.

Wie bereits erwähnt ermöglicht die vorliegende Erfindung zusätzlich zur Füllstandsregelung den Grad der Evakuierung der in den Vakuumtrichter 1 einströmenden Masse zu beeinflussen bzw. zu regeln.

Dazu ist das Einlassventil 3 am Einlass 7 vorgesehen. Hier umfasst das Ventil 3 den Ventilsitz 9, der sich am Ende des Zuführrohrs 8 befindet. Der Einlass 7 ist hier im oberen Bereich, d. h. im oberen Drittel des Vakuumtrichters 1 vorgesehen. Das Zulaufrohr 8 ragt in den Vakuumtrichter hinein, wobei bei diesem Ausführungsbeispiel das offene Ende des Zulaufrohrs 8 nach oben gewandt ist. Am oberen Ende des Zuführrohrs 8 kann darüber hinaus noch eine entsprechende Dichtung, Dichtring, etc. angeordnet sein. Das Einlassventil 3 umfasst weiter die Prallplatte 5, die dem Ventilsitz 9 des Zuführrohrs 8 gegenüberliegt. Die Prallplatte 5 ist über die Stange 17 mit einem Antrieb 4 verbunden, der die Prallplatte 5 in Pfeilrichtung F nach oben und unten entlang der Mittelachse M des Einlassventils 3 bewegen kann. Die Mittelachse M des Ventils 3 verläuft im Wesentlichen parallel zur Mittelachse D des Vakuumtrichters 1. Der Antrieb 4 umfasst einen Motor, beispielsweise einen Schrittmotor, der von einer Steuerung bzw. Regeleinrichtung 22 angesteuert wird, und der die Position der Prallplatte 5 einstellt. Bei geöffnetem Ventil ergibt sich daher ein Einlassspalt S zwischen dem Ventilsitz 9 am oberen Ende des Füllrohrs 8 und der gegenüberliegenden Unterkante der Prallplatte 5. Das über das Zuführrohr 8 zugeführte Brät bzw. die zugeführte pastöse Masse tritt dann über den umlaufenden Eintrittsspalt S in den Vakuumtrichter 1 ein.

Die Ventilgeometrie ist bevorzugt so ausgelegt, dass der Einlassspalt S eine möglichst große Länge aufweist, d. h. dass das Zulaufrohr einen möglichst großen Durchmesser, bzw. möglichst großen Umfang aufweist. Dies ermöglicht, dass der Eintrittsspalt S eine relativ kleine Höhe h einnehmen kann. Vorzugsweise weist der Eintrittsspalt S eine kreisförmige oder ovale bzw. elliptische Querschnittsgeometrie auf, aber auch andere Querschnittsgeometrien sind denkbar. Somit ergibt sich ein relativ dünner Massequerschnitt im Einströmbereich. Das heißt, sämtliche eingeschlossene Luftanteile sind oberflächennah und können somit gut aufreißen und abgesaugt werden.

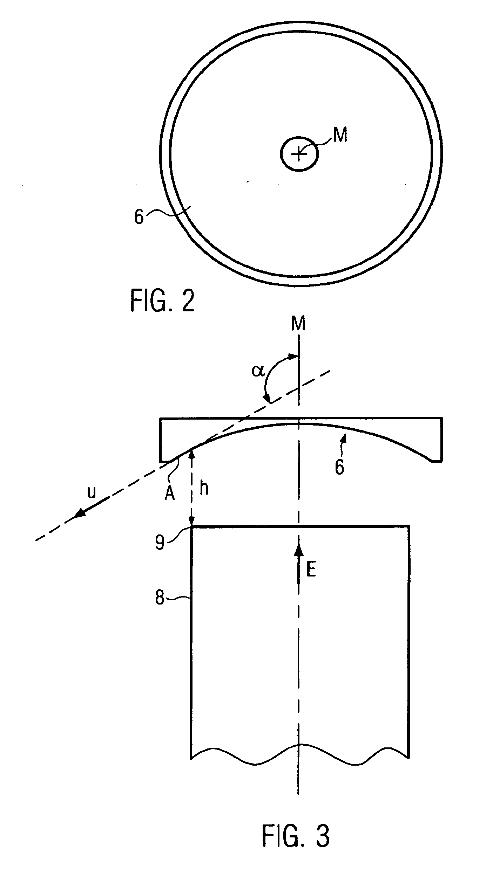

Somit kann über die Höhe h des Einlassspalts S das Ausmaß der Evakuierung beeinflusst werden. Wie aus der Fig. 1 zu erkennen ist, weist die Prallplatte 5 einen größeren Durchmesser als das Zuführrohr 8 im Bereich des Ventilsitzes 9 auf, so dass die Endbereiche der Prallplatte 5 über den Ventilsitz 9 überstehen. Vorzugsweise ist die Prallplatte 5 derart ausgebildet, dass sie das einströmende Wurstbrät nach unten, d. h. zum Auslass 13 des Vakuumtrichters 1 umlenkt. Durch die spezielle Form der Prallplatte 5 kann insbesondere bei dünnflüssigen Füllmassen der Füllstand besser kontrolliert werden, da das Brät beim Eintritt in den Trichter nicht so sehr an den Deckel und die Trichterwand spritzt. Wie beispielsweise aus Fig. 1 und 2 hervorgeht, hat dazu die Prallplatte 5 auf der zum Ventilsitz gerichteten Seite eine Aussparung 6, die zumindest im äußeren Bereich des Einlassspalts S einen Abschnitt A aufweist, der von der Mittelachse M aus schräg nach außen und unten geneigt ist. Dieser geneigte Abschnitt lenkt die Masse nach unten. Der geneigte Abschnitt A sollte zumindest in dem Bereich, der von außen an den Einlassspalt (zwischen Unterseite der Prallplatte und dem Ventilsitz 9 ) angrenzt, vorgesehen sein, muss sich aber, wie aus Fig.1 hervorgeht, nicht bis ganz zum äußeren Rand der Prallplatte 5 hin erstrecken.

Fig. 2 zeigt eine Draufsicht auf die in Fig. 1 gezeigte Prallplatte 5, wobei deutlich die Aussparung 6 zu sehen ist, die sich hier ringförmig um die Mittelachse M des Ventils erstreckt.

Die Form ist jedoch nicht auf die in Fig. 1 gezeigte Form der Aussparung 6 beschränkt. Es kann beispielsweise auch eine, wie in Fig. 3 dargestellt ist, konkav geformte Aussparung 6 in der Prallplatte 5 ausgebildet werden, die im Wesentlichen rotationssymmetrisch zur Mittelachse M verläuft. Wie beispielsweise deutlich aus Fig. 3 zu erkennen ist, weist die Aussparung 6 einen Abschnitt A auf, der hier um zirka 130° in Bezug auf die Einlassrichtung E, d. h. zur Mittelachse M geneigt ist, und so die einströmende Masse nach unten umlenkt. Der Abschnitt A sollte unter einem Winkel von annähernd 100-180° in Bezug auf die Mittelachse M bzw. die Einlassrichtung E geneigt sein, um eine entsprechende Umlenkung zu realisieren.

Gemäß der vorliegenden Erfindung ist die Höhe h des Einlassspalts S so geregelt, dass abhängig von verschiedenen Parametern der Einlassspalt S nur so groß wie erforderlich zur Füllstandsregelung und gleichzeitig so klein wie möglich zur Regelung der Evakuierung gehalten wird. Dies wird durch eine Minimalspaltregelung gelöst. Als Parameter für die Regelung kommt mindestens einer aus folgender Gruppe in Frage: Kompressibilität oder Luftgehalt der pastösen Masse vor dem Einlassventil, Kompressibilität oder Luftgehalt der pastösen Masse nach dem Auslass 13, z. B. am Auslauf des Förderwerks 14, Füllleistung der pastösen Masse von dem Vorratsbehälter in den Vakuumtrichter 1, Stückgröße von Einlagen der pastösen Masse, Druckdifferenz vor und nach dem Einlassventil 3, Füllstand, Viskosität der pastösen Masse, Temperatur der Masse, etc.

Zur Messung der Druckdifferenz vor und nach dem Einlassventil 3 können entsprechende Drucksensoren 18 vor dem Einlassventil 3 bzw. 19 im Vakuumtrichter 1 vorgesehen sein. Zur Bestimmung des Füllstands im Vakuumtrichter kann ein entsprechender Füllstandssensor 21 im Vakuumtrichter 1 vorgesehen sein. Als Füllstandssensor kann beispielsweise ein Ultraschallsensor, ein mechanischer Füllstandgeber oder ein kapazitiver oder optischer Sensor verwendet werden, der entweder den exakten Füllstand angibt oder angibt, ob der Füllstand in einem zulässigen Bereich ist. Zur Bestimmung des Luftgehalts, der nahezu proportional zur Kompressibilität der pastösen Masse ist, kann beispielsweise in dem Förderwerk 14 eine Einrichtung 16 zur Messung der Kompressibilität vorgesehen sein. Eine Einrichtung zur Messung der Kompressibilität 62, 61 kann auch vor dem Einlassventil 3 oder im Trichter (1) vorgesehen sein. In der Fig. 5 stellt 16 eine Einrichtung zur Messung der Kompressibilität dar. Die Funktion eines Kompressibilitätssensors ist beispielsweise in der EP 1040758 B1 näher erläutert. Wie bereits erwähnt wird in den Kammern 46 zur Komprimierung der pastösen Masse das Volumen verändert. Die Einrichtung 16 umfasst somit einen Drucksensor, der die Druckänderung in der volumenveränderlichen Kammer erfasst, wobei ebenfalls die exakte Volumenänderung erfasst wird, woraus sich die Kompressibilität berechnen lässt. Es können selbstverständlich auch andere bekannte Einrichtungen zur Messung der Kompressibilität verwendet werden.

Die vorab aufgeführten Messeinrichtungen, wie etwa die Einrichtungen zur Messung der Kompressibilität 16, die Drucksensoren 18, 19, der Füllstandmesser 21 können mit der Regeleinrichtung 22 verbunden sein, die dann wiederum die Einstellung des Einlassspalts S regelt.

Die Füllleistung (d. h. die Füllmenge pro Zeit) der pastösen Masse aus dem Vorratsbehälter in den Vakuumtrichter 1 kann z. B. aus den folgenden Parametern bestimmt werden und kann ebenfalls an die Steuereinrichtung 22 weitergeleitet werden: Höhe h des Öffnungsspalts S, Zeitdauer Δt (Δt = t₁ - t₂), Füllstand zum Zeitpunkt t₁, Füllstand zum Zeitpunkt t₂.

Wie aus der vorherigen Beschreibung hervorgeht, kann also die Spalthöhe h des Einlassventils 3 abhängig von unterschiedlichen Parametern so gesteuert werden, dass sowohl der Füllstand als auch die Evakuierung der pastösen Masse geregelt werden können. Die Regelung erfolgt dabei durch eine Minimalspaltregelung, wobei der Einlassspalt S nur so hoch wie erforderlich zur Füllstandsregelung und gleichzeitig so klein wie möglich zur Regelung der Evakuierung gehalten wird.

Fig. 4 zeigt schematisch den Zusammenhang zwischen Evakuierungsgrad und Spalthöhe h. Der Evakuierungsgrad ist auch abhängig von der Förderleistung und damit von der Fördergeschwindigkeit V₁; V₂ der Masse in den Trichter. Üblicherweise ist der Evakuierungsgrad bei kleiner Geschwindigkeit V₂ höher als bei größerer Geschwindigkeit V₁. Der Evakuierungsgrad hängt auch vom Unterdruck in dem Vakuumtrichter und unter Umständen von der Beschaffenheit der pastösen Masse ab, d.h. z.B. von den Einlagerungen in der pastösen Masse.

Wenn also die Spalthöhe h des Einlassspalts S in Abhängigkeit des Luftgehalts, also der Kompressibilität der pastösen Masse (z.B. vor dem Einlassventil 3 und/oder nach dem Auslass 13) geregelt wird und darüber hinaus auch noch in Abhängigkeit von Füllstandsparametern wie beispielsweise Füllleistung der pastösen Masse in den Vakuumtrichter 1 und/oder Füllstand im Vakuumtrichter 1 geregelt wird, kann dies durch einen geschlossenen Regelkreis erfolgen, wobei die Regelgrößen z.B. der Luftgehalt der pastösen Masse und der Füllstand sind und das Stellglied das Einlassventil 3. So kann ein bestimmter Luftanteil, beispielsweise 0,5 bis 10 %, eingestellt werden kann. Der Eintrittsspalt S wird aber auch so im Sinne einer Minimalspaltregelung geregelt, dass der Füllstand in einem bestimmten Füllstandssollbereich liegt.

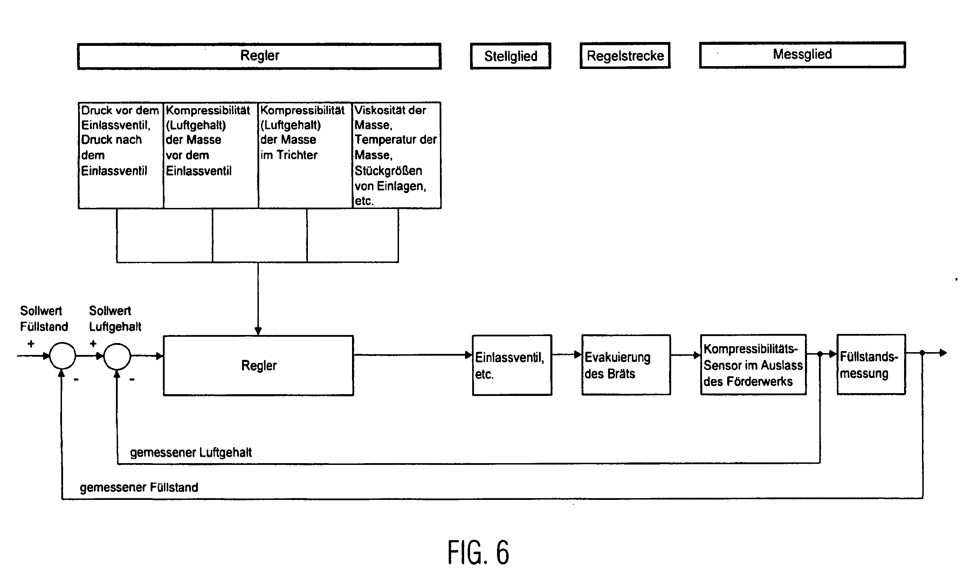

In Zusammenhang mit Fig. 6, die ein Blockschaltbild für eine Ausführungsform eines Regelkreises gemäß der vorliegenden Erfindung zeigt, wird die Regelung des Eintrittsspalts S näher erläutert.

Bei diesem Regelkreis sind die Regelgrößen der Füllstand und Evakuierungsgrad, d.h. Luftanteil bzw. Kompressibilität der pastösen Masse, und das Stellglied ist das Einlassventil. Die Regelstrecke ist die Evakuierung des Bräts, bzw. die Befüllung des Trichters. Messglieder für die geschlossene Regelung sind der Kompressibilitätssensor und der Füllstandsmesser. Bei diesem speziellen Beispiel wird zur Regelung die Kompressibilität im Auslass des Förderwerks 14 gemessen. Die Regeleinrichtung, d. h. der Regler, vergleicht Ist- und Soll-Werte der jeweiligen Regelgrößen und stellt die Eintrittsspalthöhe h in Abhängigkeit des Ist-Sollwertvergleichs ein, um einen bestimmten Luftanteil pro Volumeneinheit in der pastösen Masse einzustellen und auch den Füllstand korrekt zu halten. Zusätzlich können noch weitere Parameter Einfluss auf die Regelung nehmen, wie beispielsweise Druck vor dem Einlassventil bzw. Druck nach dem Einlassventil, Kompressibilität der Masse vor dem Einlassventil, Kompressibilität der Masse im Trichter, Viskosität der Masse, Temperatur der Masse, Stückgrößen von Einlagen etc. Die zuvor genannten Parameter können entweder wie zuvor beschrieben über entsprechende Messeinrichtungen bestimmt werden, wobei deren Werte dann dem Regler zugeführt werden oder aber eingegeben werden.

Die Steuer- bzw. Regeleinrichtung 22 ist dazu mit einer Eingabeeinrichtung verbunden, bei der z. B. die unterschiedlichen Sollwerte für Luftanteil bzw. Kompressibilität, Füllleistung, Füllstand, Druck im Vakuumtrichter 1 sowie Druck vor dem Einlassventil 3, Druck im Auslass und Eigenschaften wie z. B. Temperatur und Beschaffenheit der pastösen Masse eingegeben werden können.

Das in Figur 6 gezeigte Blockschaltbild zeigt nur ein Beispiel für eine Regelung gemäß der vorliegenden Erfindung und ist keinesfalls darauf beschränkt. Wesentlich bei der vorliegenden Erfindung ist lediglich, dass das Einlassventil das Stellglied für eine Regelung des Evakuierungsgrades der pastösen Masse, d. h. für einen bestimmten Luftanteil in der pastösen Masse bzw. der entsprechenden Kompressibilität ist.

## Patentansprüche

1. Vakuumtrichter (1) für die Wurstproduktion mit einem
Einlass (7) zum Zuführen von pastöser Masse, insbesondere Wurstbrät,
einem Auslass (13) zum Abführen der pastösen Masse,
einem Einlassventil (3), das am Einlass (7) angeordnet ist, wobei im Vakuumtrichter (1) ein Unterdruck erzeugbar ist, wobei
in geöffnetem Zustand das Einlassventil (3) einen Einlassspalt (S) für die pastöse Masse bildet,
das Ventil (3) am Einlass (7) einen Ventilsitz (9) und eine gegenüberliegende Prallplatte (5) aufweist, und der Abstand (h) zwischen Ventilsitz (9) und Prallplatte (5) die Spalthöhe (h) ergibt,
**dadurch gekennzeichnet, dass**
die Spalthöhe (h) in geöffnetem Zustand des Einlassventils (3) zur Beeinflussung des
Evakuierungsgrades der pastösen Masse regelbar ist, und
die Prallplatte (5) derart ausgebildet ist, dass sie auf der zum Ventilsitz (9) gerichteten Seite eine Aussparung (6) umfasst, die zumindest im äußeren Bereich des Einlassspalts (S) einen von der Mittelachse (M) des Ventils aus schräg nach unten oder nach unten geneigten Abschnitt (A) aufweist.

2. Vakuumtrichter nach Anspruch 1,
**dadurch gekennzeichnet, dass**
der Trichter weiter eine Regeleinrichtung (22) umfasst zum Regeln der Spalthöhe (h) in Abhängigkeit von mindestens einem Parameter aus folgender Gruppe: Kompressibilität oder Luftgehalt der pastösen Masse vor dem Einlassventil (3), Kompressibilität oder Luftgehalt der pastösen Masse nach dem Auslass (13) oder im Vakuumtrichter (1), Förderleistung eines am Auslass (13) nachfolgend angeordneten Förderwerks (14), Stückgrößen von Einlagen der pastösen Masse, Druckdifferenz vor und nach dem Einlassventil (3), Füllleistung der pastösen Masse in den Vakuumtrichter, Füllstand der pastösen Masse im Vakuumtrichter, Temperatur der pastösen Masse, Viskosität der pastösen Masse.

3. Vakuumtrichter nach Anspruch 1 oder 2,
**dadurch gekennzeichnet, dass**
der Vakuumtrichter weiter eine Regeleinrichtung umfasst zum Regeln der Spalthöhe (h) in Abhängigkeit der Kompressibilität oder des Luftgehalts der pastösen Masse vor dem Einlassventil (3) und/oder nach dem Auslass (13) und/oder zwischen Einlassventil (3) und Auslass (13) sowie in Abhängigkeit von Füllstandsparametern.

4. Vakuumtrichter nach mindestens einem der Ansprüche 1 bis 3,
**dadurch gekennzeichnet, dass**
der Einlassspalt (S) einen kreisrunden oder elliptischen oder anderen geschlossenen Querschnitt aufweist.

5. Vakuumtrichter nach mindestens einem der Ansprüche 1 bis 4,
**dadurch gekennzeichnet, dass** das Ventil (3) einen Antrieb (4) für die Prallplatte (5) zur Einstellung der Spalthöhe (h) umfasst.

6. Vakuumtrichter nach Anspruch 5,
**dadurch gekennzeichnet, dass**
der Durchmesser der Prallplatte (5) größer ist als der Durchmesser des Ventilsitzes (9).

7. Vakuumtrichter nach mindestens einem der Ansprüche 1 bis 6,
**dadurch gekennzeichnet, dass**
die Prallplatte (5) derart geformt ist, dass sie die pastöse Masse nach unten bzw. schräg nach unten in Richtung Auslass (13) lenkt.

8. Vakuumtrichter nach Anspruch 1,
**dadurch gekennzeichnet, dass**
die Aussparung (6) eine im Wesentlichen konkave Form aufweist oder ringförmig um die Mittelachse (M) des Ventils (3) verläuft.

9. Vakuumtrichter nach mindestens einem der Ansprüche 1 bis 8,
**dadurch gekennzeichnet, dass**
der Einlass (7) im oberen Bereich des Vakuumtrichters (1) in Form eines Zulaufrohrs (8) ausgebildet ist, dessen offenes Ende in den Vakuumtrichter (1) ragt und nach oben gewandt ist, wobei die Prallplatte (5) dem offenen Ende gegenüberliegt.

10. Vakuumtrichter nach mindestens einem der Ansprüche 1-9,
**dadurch gekennzeichnet, dass**
weiter vor dem Einlassventil (3) und/oder nach dem Auslass (13) des Vakuumtrichters (1) eine Einrichtung zur Bestimmung der Kompressibilität der pastösen Masse bzw. des Luftgehalts (16) angeordnet ist.

11. Vakuumtrichter nach mindestens einem der Ansprüche 1-10,
**dadurch gekennzeichnet, dass**
weiter ein Füllstandsmesser (21) im Vakuumtrichter (1) angeordnet ist.

12. Vakuumtrichter nach mindestens einem der Ansprüche 1-11,
**dadurch gekennzeichnet, dass**
ein Drucksensor vor und nach dem Einlassventil vorgesehen ist.

13. Vakuumfüller (100) mit einem Vakuumtrichter (1) nach mindestens einem der Ansprüche 1 bis 12, sowie
einem Förderwerk (14), das die pastöse Masse aus dem Auslass (13) des Vakuumtrichters (1) abführt und in ein Füllrohr (15) schiebt, um Würste mit der pastösen Masse zu befüllen,
einer Vakuumpumpe zum Erzeugen eines Unterdrucks im Förderwerk und/oder im Vakuumtrichter.

14. Einlassventil zum geregelten Einlass von pastöser Masse in einen Vakuumtrichter (1), wobei das Einlassventil (3) eine einem Ventilsitz (9) gegenüberliegende Prallplatte (5) umfasst, wobei die Prallplatte derart ausgeformt ist, dass sie die pastöse Masse in eine Richtung entgegengesetzt oder schräg zur Einlassrichtung umlenkt und dass die Prallplatte (5) derart ausgebildet ist, dass sie auf der zum Ventilsitz (9) gerichteten Seite eine Aussparung (6) umfasst, die zumindest im äußeren Bereich des Einlassspalts (S) einen von der Mittelachse (M) des Ventils aus entgegengesetzt zur Einlassrichtung oder schräg zur Einlassrichtung geneigten Abschnitt (A) aufweist.

15. Einlassventil nach Anspruch 14,
**dadurch gekennzeichnet, dass**
die Prallplatte (5) die pastöse Masse unter einem Winkel von ungefähr 100° bis 180° in Bezug auf die Einlassrichtung bzw. Mittelachse (M) des Ventils umlenkt.

16. Einlassventil nach einem der Ansprüche 14 oder 15,
**dadurch gekennzeichnet, dass**
die Prallplatte (5) derart geformt ist, dass die Prallplatte einen größeren Durchmesser aufweist als ein Ventilsitz (9).

17. Einlassventil nach einem der Ansprüche 14 bis 16,
**dadurch gekennzeichnet, dass**
die Aussparung (6) eine im Wesentlichen konkave Form aufweist oder ringförmig um die Mittelachse des Ventils verläuft.

## Claims

1. Vacuum hopper (1) for sausage production with an
inlet (7) for feeding paste mass, in particular sausage meat,
an outlet (13) for ejecting the paste mass,
an inlet valve (3), which is arranged at the inlet (7), wherein a negative pressure can be produced in the vacuum hopper (1), wherein
in the open state the inlet valve (3) forms an inlet gap (S) for the paste mass,
the valve (3) on the inlet (7) has a valve face (9) and an oppositely situated baffle (5), and the distance (h) between the valve face (9) and the baffle (5) gives the gap height (h),
**characterised in that**
the gap height (h) in the open state of the inlet valve (3) can be controlled for influencing the degree of evacuation of the paste mass, and
the baffle (5) is formed such that it comprises a recess (6) on the side facing the valve face (9), which has at least in the outer region of the inlet gap (S) a section (A) sloping obliquely downwards or sloping downwards from the central axis (M) of the valve.

2. Vacuum hopper according to Claim 1, **characterised in that** the hopper also comprises a closed-loop control device (22) for controlling the gap height (h) in dependence of at least one parameter from the following group: compressibility or air content of the paste mass before the inlet valve (3), compressibility or air content of the paste mass after the outlet (13) or in the vacuum hopper (1), conveying capacity of a conveying mechanism (14) arranged following the outlet (13), amounts of charges of the paste mass, pressure difference before and after the inlet valve (3), filling capacity of the paste mass in the vacuum hopper, filling level of the paste mass in the vacuum hopper, temperature of the paste mass, viscosity of the paste mass.

3. Vacuum hopper according to Claim 1 or 2, **characterised in that** the vacuum hopper also comprises a closed-loop control device for the control of the gap height (h) in dependence of the compressibility or of the air content of the paste mass before the inlet valve (3) and / or after the outlet (13) and / or between the inlet valve (3) and outlet (13) as well as in dependence of filling level parameters.

4. Vacuum hopper according to at least one of the Claims 1 to 3, **characterised in that** the inlet gap (S) exhibits a circular or elliptical or other dosed cross-section.

5. Vacuum hopper according to at least one of the Claims 1 to 4, **characterised in that** the valve (3) comprises a drive (4) for the baffle (5) for setting the gap height (h).

6. Vacuum hopper according to Claim 5, **characterised in that** the diameter of the baffle (5) is larger than the diameter of the valve face (9).

7. Vacuum hopper according to at least one of the Claims 1 to 6, **characterised in that** the baffle (5) is formed such that the paste mass is diverted downwards or obliquely downwards in the direction of the outlet (13).

8. Vacuum hopper according to Claim 1, **characterised In that** the recess (6) comprises an essentially concave shape or runs in a ring shape about the central axis (M) of the valve (3).

9. Vacuum hopper according to at least one of the Claims 1 to 8, **characterised in that** the inlet (7) is formed in the upper region of the vacuum hopper (1) in the shape of a feed tube (8), the open end of which protrudes into the vacuum hopper (1) and faces upwards, wherein the baffle (5) is situated opposite the open end.

10. Vacuum hopper according to at least one of the Claims 1-9, **characterised in that** furthermore a device for the determination of the compressibility of the paste mass or of the air content (16) is arranged before the inlet valve (3) and / or after the outlet (13) of the vacuum hopper (1).

11. Vacuum hopper according to at least one of the Claims 1-10, **characterised in that** furthermore a level sensor (21) is arranged in the vacuum hopper (1).

12. Vacuum hopper according to at least one of the Claims 1-11, **characterised in that** a pressure sensor is provided before and after the inlet valve.

13. Vacuum filler (100) with a vacuum hopper (1) according to at least one of the Claims 1 to 12, as well as
a conveying mechanism (14), which ejects the paste mass out of the outlet (13) of the vacuum hopper (1) and pushes it into a filling tube (15) in order to fill sausages with the paste mass,
a vacuum pump for producing a negative pressure in the conveying mechanism and /or in the vacuum hopper.

14. Inlet valve for controlling the entry of paste mass into a vacuum hopper (1), wherein the inlet valve (3) comprises a baffle (5) oppositely situated to a valve face (9), wherein the baffle is formed such that the paste mass is diverted in a direction opposite or oblique to the inlet direction and that the baffle (5) is formed such that it comprises a recess (6) on the side facing the valve face (9), which at least in the outer region of the inlet gap (S) has a section (A) which, seen from the central axis (M) of the valve, slopes opposite to the inlet direction or obliquely to the inlet direction.

15. Inlet valve according to Claim 14, **characterised in that** the baffle (5) diverts the paste mass at an angle of approximately 100° to 180° with respect to the inlet direction or central axis (M) of the valve.

16. Inlet valve according to one of the Claims 14 or 15, **characterised in that** the baffle (5) is formed such that the baffle has a larger diameter than a valve face (9).

17. Inlet valve according to one of the Claims 14 to 16, **characterised in that** the recess (6) exhibits an essentially concave shape or runs in a ring shape about the central axis of the valve.

## Revendications

1. Trémie à vide (1) pour la production de saucisses comprenant
une admission (7) pour l'arrivée de masse pâteuse, en particulier de chair à saucisses,
une sortie (13) pour l'évacuation de la masse pâteuse,
une soupape d'admission (3) disposée sur l'admission (7), une dépression pouvant être alors générée dans la trémie à vide (1), trémie dans laquelle
dans l'état d'ouverture, la soupape d'admission (3) forme une fente d'admission (S) pour la masse pâteuse,
la soupape (3) sur l'admission (7) présente un siège de soupape (9) et une chicane (5) en vis-à-vis, et la distance (h) entre le siège de soupape (9) et la chicane (5) forme la hauteur de fente,
**caractérisée en ce que**
la fente (S), dans l'état d'ouverture de la soupape d'admission (3), est réglable pour influer sur le taux d'évacuation de la masse pâteuse, et
la chicane (5) est configurée de telle sorte qu'elle comporte, sur le côté orienté en direction du siège de soupape (9), un évidement (6) qui présente, au moins dans la zone extérieure de la fente d'admission (S), une section (A) inclinée en oblique vers le bas ou vers le bas à partir de l'axe médian (M) de la soupape.

2. Trémie à vide suivant la revendication 1,
**caractérisée en ce que**
la trémie comprend en outre un dispositif de réglage (22) pour régler la hauteur de fente (h) en fonction d'au moins un paramètre du groupe suivant : compressibilité ou teneur en air de la masse pâteuse en amont de la soupape d'admission (3), compressibilité ou teneur en air de la masse pâteuse en aval de la sortie (13) ou dans la trémie à vide (1), capacité de transport d'un convoyeur (14) monté à la suite de la sortie (13), dimensions des couches de la masse pâteuse, différence de pression en amont et en aval de la soupape d'admission (3), débit de remplissage de la masse pâteuse dans la trémie à vide, niveau de remplissage de la masse pâteuse dans la trémie à vide, température de la masse pâteuse, viscosité de la masse pâteuse.

3. Trémie à vide suivant l'une des revendications 1 et 2,
**caractérisée en ce que**
la trémie comprend en outre un dispositif de réglage destiné à régler la hauteur de fente (h) en fonction de la compressibilité ou de la teneur en air de la masse pâteuse en amont de la soupape d'admission (3) et/ou en aval de la sortie (13) et/ou entre la soupape d'admission (3) et la sortie (13) ainsi qu'en fonction de paramètres de niveau de remplissage.

4. Trémie à vide suivant l'une au moins des revendications 1 à 3,
**caractérisée en ce que**
la fente d'admission (S) présente une section transversale circulaire ou elliptique ou une autre section transversale fermée.

5. Trémie à vide suivant l'une au moins des revendications 1 à 4,
**caractérisée en ce que** la soupape (3) comporte un entraînement (4) pour la chicane (5) en vue du réglage de la hauteur de fente (h).

6. Trémie à vide suivant la revendication 5,
**caractérisée en ce que**
le diamètre de la chicane (5) est plus grand que le diamètre du siège de soupape (9).

7. Trémie à vide suivant l'une au moins des revendications 1 à 6,
**caractérisée en ce que**
la chicane (5) est formée de telle sorte qu'elle dévie la masse pâteuse vers le bas ou en oblique vers le bas en direction de la sortie (13).

8. Trémie à vide suivant la revendication 1,
**caractérisée en ce que**
l'évidement (6) présente une forme essentiellement concave ou s'étend en forme d'anneau autour de l'axe médian (M) de la soupape (3).

9. Trémie à vide suivant l'une au moins des revendications 1 à 8,
**caractérisée en ce que**
l'admission (7) dans la zone supérieure de la trémie à vide (1) est configurée en forme d'un tuyau d'arrivée (8), dont l'extrémité ouverte pénètre dans la trémie à vide (1) et est tournée vers le haut, la chicane (5) étant en vis-à-vis de l'extrémité ouverte.

10. Trémie à vide suivant l'une au moins des revendications 1 à 9,
**caractérisée en ce que**
un dispositif destiné à déterminer la compressibilité de la masse pâteuse et/ou la teneur en air (16) est en outre disposé en amont de la soupape d'admission (3) et/ou en aval de la sortie (13) de la trémie à vide (1).

11. Trémie à vide suivant l'une au moins des revendications 1 à 10,
**caractérisée en ce que**
une jauge de niveau (21) est en outre montée dans la trémie à vide (1).

12. Trémie à vide suivant l'une au moins des revendications 1 à 11,
**caractérisée en ce que**
un capteur de pression est prévu en amont et en aval de la soupape d'admission.

13. Dispositif de remplissage sous vide (100) comprenant une trémie à vide (1) suivant l'une au moins des revendications 1 à 12, ainsi
qu'un convoyeur (14), qui évacue la masse pâteuse de la sortie (13) de la trémie à vide (1) et la pousse dans un tube de remplissage (15), pour remplir des saucisses de masse pâteuse,
et une pompe à vide pour produire une dépression dans le convoyeur et/ou dans la trémie à vide.

14. Soupape d'admission pour l'admission réglée de masse pâteuse dans une trémie à vide (1), la soupape d'admission (3) comportant une chicane (5) en vis-à-vis du siège de soupape (9), la chicane étant formée de telle sorte qu'elle dévie la masse pâteuse dans une direction opposée ou en oblique par rapport à la direction d'admission, et que la chicane (5) est configurée de telle sorte qu'elle comporte, sur le côté orienté en direction du siège de soupape (9), un évidement (6), qui présente au moins dans la zone extérieure de la fente d'admission (S) une section (A), inclinée en sens contraire de la direction d'admission à partir de l'axe médian (M) de la soupape ou inclinée en oblique par rapport à la direction d'admission.

15. Soupape d'admission suivant la revendication 14,
**caractérisée en ce que**
la chicane (5) dévie la masse pâteuse sous un angle d'environ 100° à 180° par rapport à la direction d'admission ou à l'axe médian (M) de la soupape.

16. Soupape d'admission suivant l'une des revendications 14 et 15,
**caractérisée en ce que**
la chicane (5) est formée de telle sorte qu'elle présente un diamètre plus grand que le siège de soupape (9).

17. Soupape d'admission suivant l'une des revendications 14 à 16,
**caractérisée en ce que**
l'évidement (6) présente une forme essentiellement concave ou s'étend en forme d'anneau autour de l'axe médian de la soupape.
